(19)

Europäisches
Patentamt
European
Patent Office
Office européen
des brevets

(11)  **EP 2 299 301 A1**

(12)     **EUROPEAN PATENT APPLICATION**

(43) Date of publication:
  **23.03.2011  Bulletin 2011/12**

(51) Int Cl.:
  **G02B 6/00** *(2006.01)*

(21) Application number: **10173784.9**

(22) Date of filing: **24.08.2010**

(84) Designated Contracting States:
  **AL AT BE BG CH CY CZ DE DK EE ES FI FR GB
  GR HR HU IE IS IT LI LT LU LV MC MK MT NL NO
  PL PT RO SE SI SK SM TR**
  Designated Extension States:
  **BA ME RS**

(30) Priority: **26.08.2009  KR 20090079030**

(71) Applicant: **LG Innotek Co., Ltd.
  Seoul 100-714 (KR)**

(72) Inventor: **KIM, Bang Gun
  100-714, Seoul (KR)**

(74) Representative: **Cabinet Plasseraud
  52, rue de la Victoire
  75440 Paris Cedex 09 (FR)**

(54)  **Backlight unit and display device using the same**

(57)   A backlight unit according to an embodiment includes: a plurality of light guide panels which incline at a first angle with a uniform thickness, and of which at least one is disposed in a first direction and which are partially overlapped with each other in a second direction perpendicular to the first direction; reflection members disposed under the light guide panels; and a light emitting module unit disposed under the reflection member and providing light to the side of each of the plurality of light guide panels.

EP 2 299 301 A1

**Description**

The present application claims priority of Korean Patent Application No. 10-2009-0079030 filed on August 26, 2010, which is hereby incorporated by reference in its entirety.

BACKGROUND OF THE INVENTION

1. Field of the Invention

An embodiment of the present invention relates to a backlight unit and a display device using the same.

2. Description of the Related Art

A liquid crystal display (LCD) which has been widely used in recent years has advantages of miniaturization, light weight, and low-power consumption. Therefore, the LCD has gradually received public attention as an alternative means capable of overcoming demerits of the existing cathode ray tube (CRT) and at present, it is mounted on and used in almost all information processing apparatuses requiring a display device.

Since the LCD is not a self-light emitting display device, the LCD needs an additional light source such as a back light unit (BLU). A lot of researches are in progress in order to provide a high-quality image by effectively utilizing light emitted from the BLU.

SUMMARY OF THE INVENTION

An embodiment provides a backlight unit having a new structure and a display device using the same.

An embodiment provides a backlight unit having a plurality of optical assemblies and a display device using the same.

An embodiment provides a backlight unit which can be manufactured by an easy manufacturing process and with low cost, and a display device using the same.

An embodiment may provide a backlight unit which can be applied to a large-size display panel and has a slim thickness and a display device using the same.

A backlight unit according to an embodiment includes: a plurality of light guide panels which incline at a first angle with a uniform thickness, and of which at least one is disposed in a first direction and which are partially overlapped with each other in a second direction perpendicular to the first direction; reflection members disposed under the light guide panels; and a light emitting module unit disposed under the reflection member and providing light to the side of each of the plurality of light guide panels.

A backlight unit according to another embodiment includes: a backlight unit including a plurality of light guide panels which incline at a first angle with a uniform thickness, and of which at least one is disposed in a first direction and which are partially overlapped with each other in a second direction perpendicular to the first direction, reflection members disposed under the light guide panels, and a light emitting module unit disposed under the reflection member and providing light to the side of each of the plurality of light guide panels; and a display panel disposed on the backlight unit and receiving light from the backlight unit to display an image.

BRIEF DESCRIPTION OF THE DRAWINGS

FIG. 1 is an exploded perspective view of a display device according to an embodiment of the present invention;
FIG. 2 is a cross-sectional view of a display module taken along line A-A of FIG. 1;
FIG. 3 is a cross-sectional view of a backlight unit;
FIG. 4 is a perspective view of a backlight unit;
FIG. 5 is a plan view of the backlight unit;
FIG. 6 is a diagram showing light guide panels of a plurality of optical assemblies; and
FIGS. 7 and 8 are diagrams showing a diffusion plate.

DETAILED DESCRIPTION OF THE PREFERRED EMBODIMENTS

In describing embodiments, it will be understood that when layers (films), regions, patterns, or structures are referred to as being "on" or "under" a substrate, layers (films), regions, pads, or patterns, "on" and "under" include "directly" or "indirectly". Further, "on" or "under" will be described on the basis of the drawings.

In the drawings, thicknesses or sizes of layers are exaggerated, omitted, or schematically illustrated for convenience and clarity of description. Further, sizes and actual sizes of constituent members are not fully reflected.

A backlight unit and a display device using the same according to embodiments of the present invention will be described with reference to the accompanying drawings.

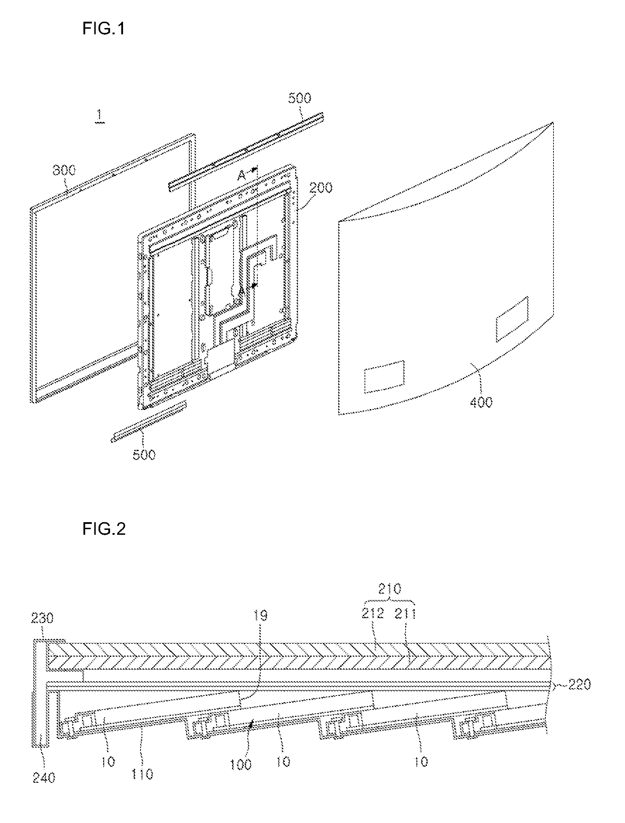

FIG. 1 is an exploded perspective view of a display device according to an embodiment of the present invention.

Referring to FIG. 1, the display device 1 according to the embodiment includes a display module 200, a front cover 300 disposed on the front surface of the display module 200, a back cover 400 disposed on the back surface of the display module 200, and a fixation member 500 for fixing the display module 200 to the front cover 300 and/or the back cover 400.

The fixation member 500 may be disposed between the front cover 300 and the display module 200 and enables the front cover 300 and the display module 200 to be coupled with each other.

Further, the fixation member 500 may be disposed between the back cover 400 and the display module 200 and enables the back cover 400 and the display module 200 to be coupled with each other.

In the embodiment, the fixation member 500 having a bar shape is shown, but the fixation member 500 is not necessarily needed and the front cover 300, the display module 200, and the back cover 400 may be coupled with each other by a fastening member such as a screw.

FIG. 2 is a cross-sectional view of a display module taken along line A-A of FIG. 1.

Referring to FIG. 2, the display module 200 includes a display panel 210 on which an image is displayed, a backlight unit 100 providing light to the display panel 210, a bottom plate 110 disposed under the display module 200, a panel supporter 240 supporting the display panel 210 at the lower side, and a top plate 230 forming the outline of the display module 200 while supporting the display panel 210 at the upper side.

The bottom plate 110 may have a box shape of which a top surface is opened to receive the backlight unit 100. The bottom surface of the bottom plate 110 may have an uneven structure like the back surface of the backlight unit 100 to correspond to the shape of the backlight unit 100. In the embodiment, a plurality of slopes are included in the bottom surface of the bottom plate 110.

However, the shape of the bottom plate 110 is not limited and for example, the bottom surface of the bottom plate 110 is flattened and an additional support for supporting the backlight unit 100 may be formed on the bottom plate 110.

In addition, one portion of the bottom plate 110 may be fixed to one portion of the top plate 230. For example, the fastening member such as the screw penetrates a part where the bottom plate 110 and the top plate 230 are overlapped with each other to allow the bottom plate 110 and the top plate 230 to be coupled with each other. However, it is not limited.

Although the display panel 210 is not shown in detail, the display panel 210 may include a first substrate 211 and a second substrate 222 that are bonded to each other to maintain a uniform cell gap while facing each other, and a liquid crystal layer interposed between the first and second substrates 211 and 212. A plurality of gate lines and a plurality of data lines crossing the plurality of gate lines are formed on the first substrate 211 and a thin film transistor (TFT) may be formed at an intersection region of the gate line and the data line. Color filters may be formed on the second substrate 212. However, the structure of the display panel 210 is not limited and the display panel 210 may have various structures. For example, the first substrate 211 may include the color filter in addition to the thin film transistor. Further, the display panel 210 may have various types of structures in accordance with a scheme driving the liquid crystal layer.

Although not shown, a gate driving printed circuit board (PCB) supplying a scan signal to the gate line and a data driving printed circuit board (PCB) supplying a data signal to the data line may be provided at the edge of the display panel 210. A polarizing film (not shown) may be disposed at any one of an upper part and a lower part of the display panel 210.

An optical sheet 220 may be disposed between the display panel 210 and the backlight unit 100 and the present invention is not limited thereto.

The optical sheet 220 may include a diffusion sheet and/or a prism sheet.

The diffusion sheet may evenly diffuse light emitted from a light guide panel and the diffused light may focus on the display panel by the prism sheet. The type or number of the optical sheets 220 may be added or deleted within the technical scope of the embodiment and the present invention is not limited thereto.

Meanwhile, the backlight unit 100 may include a plurality of optical assemblies 10 forming a plurality of divided driving regions. In addition, the optical assemblies 10 are driven with different luminances depending on a gray peak value of an image signal inputted into the display panel 210 or a color coordinate signal so as to control the luminance of an image displayed through the display panel 210.

Hereinafter, a configuration of the backlight unit 100 will be described in detail.

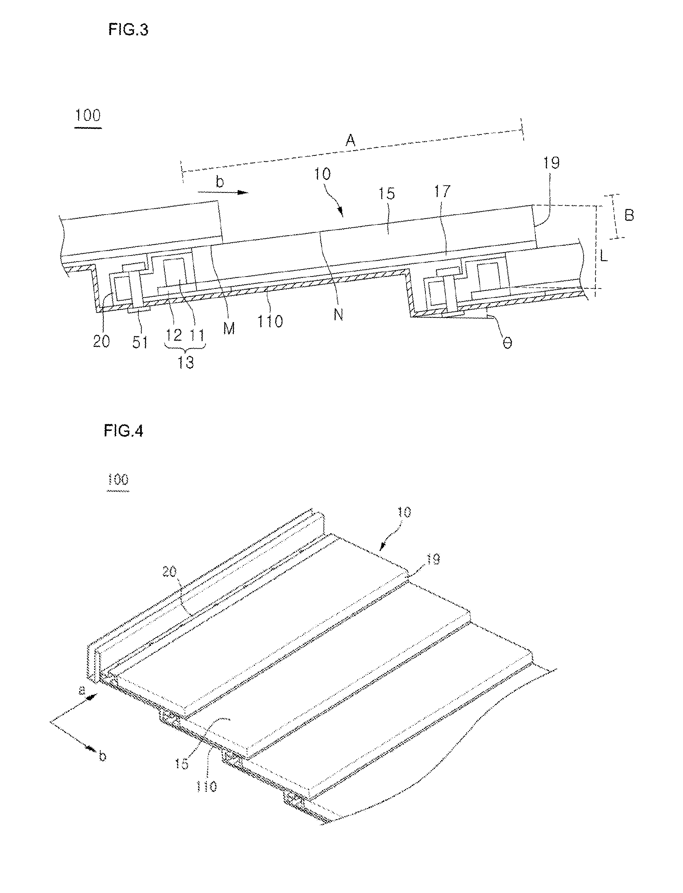

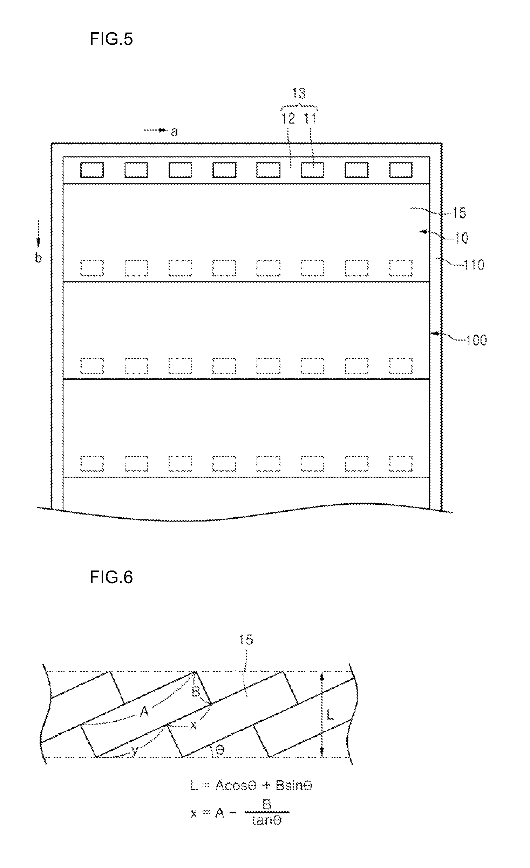

FIG. 3 is a cross-sectional view of the backlight unit, FIG. 4 is a perspective view of the backlight unit, and FIG. 5 is a plan view of the backlight unit.

Referring to FIGS. 3 to 5, the backlight unit 100 includes the plurality of optical assemblies 10. The plurality of optical assemblies 10 incline at a first angle $\theta$ to be disposed in a second direction b such that first regions M of the optical assemblies 10 are overlapped with each other.

The optical assembly 10 may include a light guide panel 15, a light emitting module unit 13 disposed at one portion of the light guide panel 15, and a side cover 20 fixing the light guide panel 15 and the light emitting module unit 13.

The light emitting module unit 13 is disposed on the side of the light guide panel 15 and provides light to the light guide panel 15.

The light emitting module unit 13 may include a substrate 12 and a plurality of light emitting devices 11 mounted on the substrate 12 while forming an array.

The substrate 12 may be a printed circuit board (PCB) and for example, may be formed by a metal core PCB, an FR-4 PCB, a general PCB, a flexible substrate, and the like. Further, the light emitting device 11 may be a light emitting diode (LED) and the light emitting diode may be, for example, a red, green, blue, or white light emitting diode emitting red, green, blue, or white light, but the present invention is not limited thereto.

Meanwhile, although not shown, a light guide member (not shown) may be formed between the light emitting module unit 13 and the light guide panel 15. The light guide member (not shown) may be made of the same material as the light guide panel 15 and the light guide member is formed in space between the light emitting module unit 13 and the light guide panel 15 to allow the light emitted from the light emitting module unit 13 to be effectively guided to the light guide panel 15.

Further, although not shown, a phosphor luminescent film (PLF) may be formed between the light emitting module unit 13 and the light guide panel 15. The phosphor luminescent film (PLF) is a film including a phosphor luminescent substance and the phosphor luminescent substance is excited by first light emitted from the light emitting module unit 13 to generate second light.

For example, the light emitted from the light emitting module unit 13 is blue and when the phosphor luminescent substance included in the PLF is a yellow phosphor luminescent substance which is excited by the blue light to generate yellow light, two kinds of lights are mixed, such that white light may be provided to the light guide panel 15. However, the present invention is not limited thereto.

The light guide panel 15 makes a surface light source provided from the light emitting module unit 13 and provides the corresponding light to the display panel 210.

The light guide panel 15 is made of a transparent material and for example, may include any one of acryl resin series such as polymethyl metaacrylate (PMMA), polyethylene terephthalate (PET), poly carbonate (PC), cycloolefin copolymer (COC), and polyethylene naphthalate (PEN) resin.

The light guide panel 15 may have a rectangular shape which elongates in a first direction a, but the present invention is not limited thereto. Further, the light guide panel 15 may have a substantially predetermined thickness with respect to the entire region.

A scattering pattern (not shown) may be formed on the top surface or bottom surface of the light guide panel 15. The scattering pattern has a predetermined pattern to serve to improve the uniformity of light emitted through the light guide panel 15 by anti-reflecting incident light.

The light guide panel 15 may be manufactured by an extrusion molding method. Therefore, although the light guide panel 15 elongates with, for example, 1 meter or more in the first direction a, the light guide panel 15 may be easily manufactured and may be manufactured to have a predetermined thickness. Further, after the extrusion molding, the scattering pattern (not shown) may be formed on the top surface or bottom surface of the light guide panel 15.

The light guide panel 15 may be manufactured by an injection molding method. However, when the light guide panel 15 is manufactured by the injection molding method, it is difficult to manufacturing the light guide panel 15 having a long length.

Further, the number of the light guide panels 15 arranged in the first direction a is smaller than the number of the light guide panels 15 arranged in a second direction b. For example, at least one light guide panel 15 may be disposed in the first direction a and a plurality of light guide panels 15 may be disposed in the second direction b which is perpendicular to the first direction a. Herein, the first direction a may be the same as a direction in which the plurality of light emitting devices 11 are linearly disposed.

In the embodiment, since the light guide panel 15 is manufactured by the extrusion molding method, the light guide panel 15 may be manufactured with a sufficiently long length and one light guide panel 15 may be disposed in the first direction a.

At least one light guide panel 15 is disposed in the first direction a and although two or more light guide panels 15 are disposed in the first direction a, the light guide panels 15 are not overlapped with each other. In addition, the plurality of light guide panels 15 are disposed in the second direction b and may be partially overlapped with each other in the second direction b.

A reflection member 17 may be formed on the bottom surface of the light guide panel 15. Therefore, a part of the light inputted from the light emitting module unit 13 through the side of the light guide panel 15 is reflected by the reflection member 17 and thereafter, may be emitted to the top surface of the light guide panel 15.

Further, the reflection member 17 may serve to prevent interference by light generated in other optical assemblies 10 which are overlapped with each other.

Referring to FIGS. 3 and 4, since the light guide panel 15 may have an uniform thickness, a lot of light may be emitted to a side 19 disposed in an opposite direction to a side facing the light emitting device 11. Since a part where the side 19 of the light guide panel 15 is disposed is brighter than other parts when viewed from the upper side of the light guide panel 15, the bright line may be observed in the part of the side 19.

Therefore, the side 19 of the light guide panel 15 is surface-treated to prevent the bright line from being generated, thereby providing light having uniform luminance.

The surface treatment may include, for example, painting using photo solder resist (PSR) ink having at least one color of black, white, and gray colors. However, it is not limited thereto.

Meanwhile, in order to prevent a bright line from being generated, the diffusion plate may be disposed on the backlight unit 100. This will be described below.

The side cover 20 may be coupled with one portion of the light guide panel 15 and may receive the light emitting module unit 13 therein. Therefore, the side cover 20 may fix the light guide panel 15 and the light emitting module unit 13 and may couple the backlight unit 100 to the bottom plate 110 by using a fastening screw 51 such as a screw, and the like.

The side cover 20 may be made of a plastic or metallic material. However, it is not limited to the shape and material of the side cover 20 and the side cover may be modified in accordance with the design of the backlight unit 100.

The optical assemblies 10 include a partial region of the light guide panel 15, a first region M including the light emitting module unit 13 and the side cover 20, and a second region N emitting light provided from the first region M to the front side.

That is, the optical assembly 10 may include a first region M disposed under an adjacent optical assembly 10 and a second region N other than the first region M. Herein, the second region N may include a region disposed on an adjacent optical assembly 10 and a region which is not disposed on or under the adjacent optical assembly 10.

The plurality of optical assemblies 10 may be disposed in the second direction b such that the first region M is disposed under a second region N of the adjacent optical assembly 10.

Accordingly, the first regions M of the optical assemblies 10 may not be observed when viewed from an upper direction of the optical assembly 10. However, since a first region M of an optical assembly 10 which is disposed at the leftmost side in FIG. 4 among the optical assemblies 10 is not overlapped, the first region M may be observed when viewed from the upper direction.

The optical assemblies 10 may have a rectangular shape which elongates in the first direction a as shown in FIGS. 4 and 5 and is not limited thereto. Since the optical assemblies 10 have such a shape, the plurality of optical assemblies 10 are disposed in the second direction b to configure the backlight unit 100. For example, the backlight unit 100 may be formed by disposing the plurality of optical assemblies 10 in an array of 1 x n.

Each of the optical assemblies 10 may be manufactured as an independent assembly and the optical assemblies 10 are disposed close to each other to form a module-type backlight unit. The module-type backlight unit may provide light to the display panel 210 as a backlight means.

The backlight unit 100 according to the embodiment may be driven in a full driving scheme or a partial driving scheme such as a local dimming scheme, an impulsive scheme, or the like.

When the backlight unit 100 is driven in, for example, the local dimming scheme, each of the optical assemblies 10 may be driven in accordance with a gray-level peak value of an image signal or a color coordinate signal applied to the display panel 210.

That is, when the backlight unit 100 operates in the local dimming scheme, a black part of an image decreases the luminance of the backlight unit 100 in link with the luminance of the image signal and a bright part of the image increases the luminance of the backlight unit 100 to improve a contrast ratio and definition and save cost by reducing power consumption.

FIG. 6 is a diagram showing light guide panels of a plurality of optical assemblies.

Referring to FIGS. 3 and 6, since the plurality of optical assemblies 10 incline at the first angle θ to be disposed in the second direction b, a thickness L occupied by the light guide panel 15 may be determined depending on the first angle θ and the width A and the thickness B of the light guide panel 15 in the backlight unit 100 as shown in Equation 1.

[Equation 1]

$$L = A\cos\theta + B\sin\theta$$

Further, an overlapping distance x in which the light guide panels 15 are overlapped with each other may also be determined depending on the first angle θ and the width A and the thickness B of the light guide panel 15 in the backlight unit 100 as shown in Equation 2.

$$x = A - \frac{B}{\tan\theta}$$

Since the plurality of light guide panels 15 incline at the first angle θ to be disposed in the second direction b, it is possible to reduce thicknesses L occupied by the light guide panels 15.

The first angle θ may be larger than 0° and less than 90° and may preferably be 0.1° to 30°, but is not limited thereto.

The optical assemblies 10 may individually provide light to each of the light guide panels 15 because the light emitting device 11 provides light on the side of the light guide panel 15 and is provided with the plurality of light guide panels 15.

Therefore, since the light emitting device 11 is disposed under the reflection member 17, a problem in which light emitted from the light emitting device 11 is observed as a hot spot may be solved and since the number of the optical sheets can be decreased, it is possible to reduce the thickness L of the backlight unit 100.

Referring to FIG. 2, the optical sheet 220 may be disposed on the backlight unit 100. At this time, the optical sheet 220 may line-contact the plurality of optical assemblies 10.

Since the plurality of optical assemblies 10 incline at the first angle θ to be disposed in the second direction b and the light guide panel 15 has a rectangular shape which extends in the first direction a with a predetermined thickness, the top surface of the backlight unit 100 is constituted by a plurality of lines. Therefore, the optical sheet 220 may be supported on the backlight unit 100 by line contact.

However, the optical sheet 220 is not limited thereto and the optical sheets 220 may be arranged on the backlight unit 100 at a regular interval.

Further, since the plurality of optical assemblies 10 incline at the first angle θ to be disposed in the second direction b, the plurality of optical assemblies 10 incline to have the first angle θ with respect to the display panel 210.

In the backlight unit 100 according to the embodiment, a process of manufacturing the backlight unit 100 by assembling the optical assemblies 10 is simple and it is possible to improve productivity by minimizing loss which may be generated while the assembling process. Further, since the generation of a failure by a scratch of the light guide panel which may be generated during the assembling process of the backlight unit 100 is decreased and the generation of optical mura may be reduced, it is possible to improve process reliability and improve quality.

Since the optical assembly 10 can be manufactured by extrusion molding, a manufacturing process is simple and mass production is easy, and the backlight unit 100 according to the embodiment may be applied to backlight units having various sizes.

When a failure occurs in any one of the optical assemblies 10 of the backlight unit 100 according to the embodiment, only the optical assembly having the failure is replaced without replacing all the backlight units 100. Therefore, a replacing work is easy and part replacing cost is saved.

The optical assembly 10 and the backlight unit 100 with the same according to the embodiment are robust and highly durable with respect to a shock from the outside or an environmental change.

In the optical assemblies 10 of the backlight unit 100 according to the embodiment, since the adjacent optical assemblies 10 are partially overlapped with each other and surface treatment of the side 19 of the optical assembly 10 is performed, the generation of the bright line or black line on the boundaries of the optical assemblies 10 is reduced and the uniformity of light can be ensured.

The backlight unit 100 according to the embodiment is easily applied to a large-size display panel. Further, the embodiment is advantageous in slimming the backlight unit and the display device.

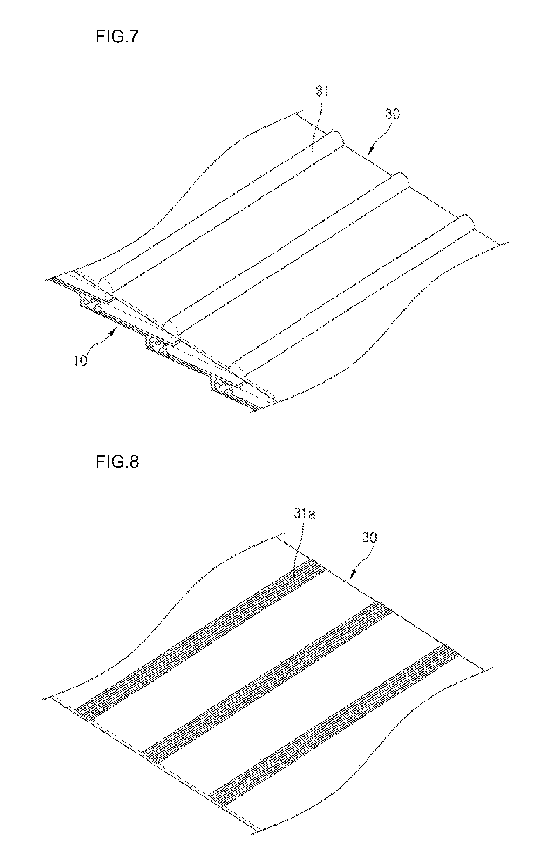

FIGS. 7 and 8 are diagrams showing a diffusion plate.

Referring to FIGS. 7 and 8, the diffusion plate 30 is disposed between the backlight unit 100 and the optical sheet 220 to prevent the bright line from being generated in the backlight unit 100.

A diffusion pattern 31 may be formed on the diffusion plate 30. The diffusion pattern 31 may be formed in a part corresponding to the side 19 of the backlight unit 100. That is, the diffusion pattern 31 may be partially formed in only an upper part of the side 19.

The diffusion pattern 31 may be, for example, a hemispheric pattern 31 of FIG. 7 or an uneven pattern 31a of FIG. 8, but is not limited thereto.

The diffusion plate 30 may be formed by, for example, extrusion molding, but is not limited thereto. The diffusion pattern 31 may be formed while extruding the diffusion plate 30 by using a roller during the extrusion molding.

The diffusion plate 30 may be made of, for example, any one of acryl resin series such as polymethyl metaacrylate (PMMA), polyethylene terephthalate (PET), poly carbonate (PC), cycloolefin copolymer (COC), and polyethylene naphthalate (PEN) resin.

When the diffusion plate 30 is disposed between the backlight unit 100 and the optical sheet 220, the diffusion plate 30 may line-contact the backlight unit 100. However, the diffusion plate 30 may not be formed.

An embodiment may provide a backlight unit having a new structure and a display device using the same.

An embodiment may provide a backlight unit having a plurality of optical assemblies and a display device using the same.

An embodiment may provide a backlight unit which can be manufactured by an easy manufacturing process and with low cost and a display device using the same.

An embodiment may provide a backlight unit which can be applied to a large-size display panel and has a slim thickness and a display device using the same.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

**1.**    A backlight unit, comprising:

a plurality of light guide panels which incline at a first angle with a uniform thickness, and of which at least one is disposed in a first direction and which are partially overlapped with each other in a second direction perpendicular to the first direction;
reflection members disposed under the light guide panels; and
a light emitting module unit disposed under the reflection member and providing light to the side of each of the plurality of light guide panels.

2. The backlight unit of claim 1, wherein the light emitting module unit includes a substrate and a plurality of light emitting devices installed on the substrate.

3. The backlight unit of claim 2, wherein the plurality of light emitting devices are disposed on the side of the light guide panel.

4. The backlight unit of claim 1, wherein the light guide panel includes any one resin material of polymethyl metaacrylate (PMMA), polyethylene terephthalate (PET), poly carbonate (PC), cycloolefin copolymer (COC), and polyethylene naphthalate (PEN).

5. The backlight unit of claim 1, wherein the light guide panel has a rectangular shape which extends in the first direction.

6. The backlight unit of claim 1, wherein one light guide panel is disposed in the first direction and the plurality of light guide panels are disposed in the second direction.

7. The backlight unit of claim 1, wherein the light guide panel is painted with any one color of black, white, and gray colors on the side opposite to the side where the light emitting module unit is disposed.

8. The backlight unit of claim 1, further comprising an optical sheet disposed on the light guide panel.

9. The backlight unit of claim 8, further comprising a diffusion plate between the light guide panel and the optical sheet.

10. The backlight unit of claim 9, wherein the diffusion plate includes a hemispheric or uneven diffusion pattern.

11. The backlight unit of claim 10, wherein the diffusion pattern is partially formed in the upper part of the side opposite to the side where the light emitting module unit of the light guide panel is disposed.

12. The backlight unit of claim 1, further comprising a phosphor luminescent film between the light emitting module unit and the light guide panel.

13. The backlight unit of claim 1, wherein when the width of the light guide panel is set as A, the thickness of the light guide panel is set as B, and the first angle is set as θ, the thickness L occupied by the light guide panel satisfies:

$$L = A cos\theta + B sin\theta$$

14. The backlight unit of claim 1, wherein when the width of the light guide panel is set as A, the thickness of the light guide panel is set as B, and the first angle is set as θ, an overlapping distance x of the light guide panels satisfies:

$$x = A - \frac{B}{tan\theta}$$

15. The backlight unit of claim 1, further comprising a bottom plate supporting the light guide panel, the reflection member, and the light emitting module unit and including a plurality of slopes which are inclined the first angle.

FIG.1

FIG.2

FIG.3

FIG.4

FIG.5

FIG.6

$$L = A\cos\theta + B\sin\theta$$

$$x = A - \frac{B}{\tan\theta}$$

FIG.7

FIG.8

**Europäisches Patentamt**
**European Patent Office**
**Office européen des brevets**

## EUROPEAN SEARCH REPORT

Application Number

EP 10 17 3784

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/161361 A1 (MEIR NOAM [IL] ET AL) 25 June 2009 (2009-06-25) | 1-14 | INV. G02B6/00 |
| Y | * paragraphs [0029], [0062], [0064], [0093], [0094]; figures 28,29, 34, 35, 36, 41 * | 15 | |
| | ----- | | |
| X | JP 2004 206916 A (SAKAI YOSHIHIRO) 22 July 2004 (2004-07-22) | 1-3,5,6, 8,14 | |
| Y | * paragraphs [0015], [ 0021]; figure 4 * | 15 | |
| | ----- | | |

TECHNICAL FIELDS SEARCHED (IPC)

G02B

The present search report has been drawn up for all claims

| Place of search | Date of completion of the search | Examiner |
|---|---|---|
| Munich | 2 February 2011 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 3784

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2011

| Patent document cited in search report | | Publication date | Patent family member(s) | | Publication date |
|---|---|---|---|---|---|
| US 2009161361 | A1 | 25-06-2009 | US | 2009290380 A1 | 26-11-2009 |
| | | | US | 2009162015 A1 | 25-06-2009 |
| | | | US | 2010272392 A1 | 28-10-2010 |
| | | | US | 2011013415 A1 | 20-01-2011 |
| JP 2004206916 | A | 22-07-2004 | NONE | | |

For more details about this annex : see Official Journal of the European Patent Office, No. 12/82

**EP 2 299 301 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090079030